# EUROPEAN PATENT APPLICATION

(11) **EP 4 661 123 A1**
(43) Date of publication of application: **10.12.2025**
(21) Application number: 24180350.1
(22) Date of filing: 06.06.2024
(51) Int. Cl.: H01M 10/04, H01M 50/609

(54) **BATTERY CELL PRESSING JIG FOR MANUFACTURING A BATTERY CELL AND BATTERY CELL MANUFACTURING SYSTEM**

(71) Applicant: LG Energy Solution, Ltd., Seoul 07335 (KR)
(72) Inventor: CHOI, Jin Hyeong, 34122 Daejeon (KR); KIM, Sung Yun, 34122 Daejeon (KR)
(74) Representative: Goddar, Heinz J.

(57) **Abstract**

The present invention relates to a battery cell pressing jig for manufacturing a battery cell, the battery cell pressing jig comprising:
a first pressure pad configured to apply a uniform mechanical pressure to a first main outer surface of a pouch-type battery cell in a direction essentially perpendicular to the first main outer surface;
a second pressure pad configured to apply a uniform mechanical pressure to a second main outer surface of the pouch-type battery cell in a direction essentially perpendicular to the second main outer surface, the first and second main outer surfaces of the pouch-type battery cell being opposite each other;
wherein the first and the second pressure pads are made of an elastic material. The invention further relates to a battery cell manufacturing system.

## Description

### FIELD OF THE INVENTION

The present invention relates to a battery cell pressing jig, and more particularly, a pressing jig for delivering an even pressure to a battery cell during the jig formation in the pouch-type battery activation process. The present invention further relates to a battery cell manufacturing system comprising a battery cell pressing jig.

### BACKGROUND

Secondary batteries are ubiquitous in modern consumer electronics and an increasing feature in current vehicular technology. Secondary batteries provide a means for storing energy in a stack of two active electrode materials, forming anode and cathode, separated by a separator, with an electrolyte for ion transfer between the active electrode materials. Batteries come in various shapes and configurations, each with distinct advantages and applications. The most common battery types are cylindrical, prismatic, and pouch. The battery activation process, also known as formation, is a crucial step in the manufacturing of lithium-ion batteries. During this process, the battery undergoes its initial charge and several controlled charge-discharge cycles, which serve to form a stable Solid Electrolyte Interphase (SEI) layer on the anode. This layer is essential for preventing further decomposition of the electrolyte and ensuring the long-term stability and performance of the battery. The formation process typically involves charging the battery at a slow rate to allow for the gradual and uniform formation of the SEI layer, with careful monitoring and control of voltage, current, and temperature to prevent damage and optimize the battery's performance. Rest periods between cycles allow the SEI layer to stabilize and gases to dissipate, further enhancing the battery's reliability. This meticulous process ensures that each battery cell meets stringent quality standards, resulting in batteries that are safe, efficient, and have a long operational lifespan.

The degassing process during battery formation respectively during the electrolyte filing process presents several significant challenges that impact safety, efficiency, and product quality. Handling the gases generated, which can be flammable or toxic, requires robust safety protocols to prevent fire and explosion risks. Ensuring the structural integrity of the cells during and after degassing is critical, as the process can introduce mechanical stresses that may lead to defects or leaks. The need for uniform degassing adds complexity, as variations can result in inconsistent battery performance. This process is also time-consuming and costly, requiring specialized equipment and careful integration into the manufacturing workflow without hindering production rates. Rigorous quality control measures are necessary to verify proper degassing and resealing, which can be resource-intensive.

When electrolyte is filled into a pouch-type secondary battery, both sides of the pouch become convex. Therefore, it is necessary to press both sides of the pouch to increase the battery's capacity. This pressing action ensures that the electrolyte is evenly distributed within the pouch and that gases are effectively removed from the pouch, thereby enhancing the battery's capacity. The pressing is essential for evenly spreading the electrolyte and for the removal of gas, and it is crucial that the gaps between each battery cell of the electrode assembly are minimized to maximize the battery's capacity. Document KR 20150050223 A discloses a pressurized jig capable for delivering pressure to a pouch battery cell by having a structure capable of pressurizing the battery cell upon injection of air.

### SUMMARY OF THE INVENTION

However, the airbag disclosed therein has the disadvantage that it is made of an inflexible material and therefore does not provide sufficient elasticity, especially at high pressures. This can lead to insufficient outgassing, particularly in the outer areas of the battery cells, which often have an uneven and/or beveled surface.

In view of this prior art, it is the objective of the invention to improve a battery cell pressing jig and an according battery cell manufacturing system such that the highest possible outgassing and the most homogeneous electrolyte distribution is achieved, thus maximizing the service life and capacity of the battery cells.

According to a first aspect, a battery cell pressing jig for manufacturing a battery cell is provided, the battery cell pressing jig comprising a first pressure pad configured to apply a uniform mechanical pressure to a first main outer surface of a pouch-type battery cell in a direction essentially perpendicular to the first main outer surface; a second pressure pad configured to apply a uniform mechanical pressure to a second main outer surface of the pouch-type battery cell in a direction essentially perpendicular to the second main outer surface, the first and second main outer surfaces of the pouch-type battery cell being opposite each other, wherein the first and the second pressure pads are made of an elastic material. In particular, it may be provided that the material itself is elastic in its initial state. Alternatively, it may be provided that the pressure pad is given elasticity by providing a certain woven or non-woven structure of a non-elastic material.

It may be provided that the surface areas of the first and the second pressure pad each protrude beyond the respective outer surfaces of the battery cell. The pressure pads may have a larger surface area than the surface area of the battery cells. In particular, it may be provided that the outer contour of the surface of the battery cell is completely overlapped by the outer contour of the pressure pad. It further can be provided that the first and second pressure pads each are adapted to curve around outer edges of the battery cell.

It is possible that the first and second outer surfaces of the battery cell are beveled in at least one respective edge area adjacent to respective terminals of the battery cell. It may be provided that cabling is arranged between the layered structure consisting of anodes, electrodes, separators, current collectors, etc. and the terminal in the beveled area of the battery cell.

The pressure pads can be made of or comprise silicone or rubber. Alternatively, different areas of the pressure pad can be made of different materials. For example, materials with different elasticities can be used for different areas of the pressure pad. For example, a material with lower elasticity can be used in a central area of the pressure pad and any number of other materials can be used successively towards the edge areas of the pressure pad, the elasticity of which increases towards the edge area.

The pressure pads can be configured as inflatable tubes. It can be provided that each tube has its own pressure supply line. An inert gas such as nitrogen, argon and/or carbon dioxide can be used for inflating the inflatable tubes. Alternatively, the pressure pads are configured as non-inflatable elastic pads. Alternatively, the pressure pad may be partially non-inflatable and partially inflatable. For example, a central area of the pressure pad can consist of non-inflatable solid material or at least of a chamber shielded from the rest of the pressure pad, while edge areas of the pressure pad can be configured to be inflatable.

It is conceivable that the surface area of the pressure pad facing the battery has a concave shape when inflated. For example, several ring-shaped seams can be provided on the pressure pad, which are arranged closer together in a central area than in the edge areas of the pressure pad, so that a central pressure pad area expands to a lesser extent than in the edge areas.

It is conceivable that the pressure pad has a changing elasticity profile in the direction along its surface, for example due to a varation in material properties and/or a variation in material thickness. For example, the material thickness of the pressure pad configured as inflatable can be greater in a central pressure pad area than in the edge areas of the pressure pad. The thickness can decrease gradually and/or continuously.

It is further conceivable that the pressure pads comprise a plurality of pressure zones configured to apply different pressures along the respective main outer surface of the battery cell. The different pressure zones can be provided by a plurality of pressure compartments fluidically separated from each other. It is possible that each one of the plurality of pressure compartments has an individual pressure supply line.

It is conceivable that the pressure pads each are provided with an inner mesh structure or cross braces arranged within the pressure pads to provide different strength areas in the pressure pads. For example, the mesh structure may consist of several elastic bands that are arranged inside the pressure pad and connect the front of the pressure pad and the back of the pressure pad. It may be provided that the bands are slack/untensioned in an uninflated initial state of the pressure pad and are tensioned in an inflated state of the pad and exhibit increasing tensile stress with increasing pad volume. The bands can be arranged and/or configured in such a way that different elasticity ranges are provided on the front of the pressure pad. For example, in a central area of the pressure pad, the tapes can be provided with a greater thickness and/or a greater number of bands per area can be arranged so that the elasticity of the pressure pad is lower in this area. Correspondingly, in the edge areas of the pressure pad, the bands may have a smaller thickness and/or a smaller number of bands per area, so that greater elasticity is provided on the front of the pressure pad in these areas.

Alternatively, if elastic struts are used, it may be provided that the struts are arranged inside the pressure pad and connect the front wall to the rear wall and support them against each other, thus achieving the opposite effect to the mesh structure. The elastic struts can exert a predetermined compressive stress between the front wall and the rear wall. This means that the struts can be used with pressure pads that are not inflatable, as the pressure pad already has its maximum expansion in terms of volume in an initial state of the pressure pad in which it is not yet in contact with a battery cell. By bringing the pressure pad into contact with the battery cell, the elastic struts can be compressed so that the pressure pad can nestle against the battery cell. By specifically arranging stronger struts in a central area of the pressure pad, for example, greater rigidity of the pad can be achieved there and, correspondingly, less rigidity can be generated in the edge areas of the pad by providing weaker struts in an edge area of the pad. Stronger struts can be achieved by using thicker struts, more struts per area and/or struts made of a stiffer material. Conversely, weaker struts can be achieved, for example, by using thinner struts, fewer struts per surface area and/or struts made of a more elastic material.

It can be provided that the pressure pads are each mounted on a front side of a plate which is arranged on a side of the pressure pad facing away from the respective main outer surface of the battery cell. The plates can serve as counter bearings for the pressure pads. A pressure supply line for inflating the pressure pad can be arranged inside the plate. For its part, the plate can be pressurized from the outside. The pressing jig can be subjected to a pressure force on both sides via the plates, which can then be transferred evenly to the main surfaces of the battery cell via the pressure pads.

It can be provided that the back side of the plate opposite the front side facing the battery cell is fastened to an inflatable cushion, wherein the side of the cushion facing away from the plate is attached to a further plate serving as an abutment. It may be possible to pressurize the inflatable cushion via a separate pressure supply line. It may be possible, for example, for the cushion and the pressure pad to be inflatable. Alternatively, it may be provided that the cushion is inflatable and the pressure pad is non-inflatable. By providing the inflatable cushions on both sides of the battery cell, it can be achieved that the battery cell can still be laterally balanced even after mechanical pressure has been applied to the plates by adjusting the pressures in the lateral inflatable cushions so that the battery cell is in the desired lateral alignment.

The invention further refers to a battery cell manufacturing system, comprising a plurality of battery pressing jigs according to one of the preceding claims, wherein the battery pressing jigs are arranged in a frame next to each other in a direction perpendicular to the surfaces of the battery cells and wherein each battery pressing jig is movable in the direction perpendicular to the surfaces of the battery cells. The battery pressing jigs are aligned to one another by a guiding mechanism in a direction parallel to the surfaces of the battery cells. A first one of the battery pressing jigs in the series of the plurality of battery pressing jigs is arranged adjacent to a boundary wall of the frame, and wherein a last one of the battery pressing jigs in the series of the plurality of battery pressing jigs is arranged adjacent to a pushing device which is adapted to push the plurality of battery pressing jigs along the guiding mechanism towards the boundary wall, wherein an inflation device is provided, which is configured for inflating the plurality of pressure pads and/or inflatable cushions of the plurality of battery pressing jigs.

The pushing unit can be provided to push the plurality of battery cell pressing jigs against the boundary wall. The battery cell pressing jigs can be aligned next to each other in a frame of the battery cell manufacturing system. The pressing jigs arranged next to each other each can share a plate arranged between them, which is provided with pressure pads on both sides. One side of the plate can face a first main surface of a first battery and the opposite side of the plate can face a second main surface of a second battery. The frame can comprise the guiding mechanism along which the battery cell pressing jigs can be guided and can be movably held, whereby the battery pressing jigs can be movable in a direction perpendicular to the surfaces of the battery cells. The guiding mechanism can consist of two or more rods along which the pressing jigs can be moved. For this purpose, the plates can have corresponding holes through which the rods can be inserted. For the pressing process, the pusher can be moved in the direction of the boundary wall so that the pressing jigs 1 are pressed together and also moved in the direction of the boundary wall. In the process, the battery cells can be pressed between the respective pressure pads. An inflation unit can be provided, which is connected to respective pressure pads via individual pressure supply lines in order to set the desired pressure in the pressure pads. In particular, the pushing unit can have a pusher 21 which presses against a plate assembly, between which a plurality of springs can be arranged. The plate assembly in turn can adjoin a plate of a first one of the series of the plurality of pressing jigs. The boundary wall can also be part of such a plate assembly with springs arranged therebetween. The springs can serve to cushion impacts in order to prevent damage to the battery cells. The plate assembly of the boundary wall can also be movable along the guide mechanism and can in turn be supported by a load cell on a plate rigidly mounted on the frame. The load cell can be used to determine a pressure acting on the pressing jigs. The measured pressure can be used to control the pressurization of the pusher and/or the pressurization of the pressure pads. Alternatively, the pressure pads can be configured to be non-inflatable.

### DETAILED DESCRIPTION OF EMBODIMENTS

The features and numerous advantages of the battery cell pressing jig for manufacturing a battery cell and battery cell manufacturing system according to the present invention will best be understood from a detailed description of preferred embodiments with reference to the accompanying drawings, in which:
- Fig. 1: illustrates a cross sectional view of a battery cell pressing jig known from prior art;
- Fig. 2: illustrates a cross sectional view of a first embodiment of a battery cell pressing jig according to the invention;
- Fig. 3: illustrates a cross sectional view of a second embodiment of a battery cell pressing jig according to the invention;
- Fig. 4: illustrates a cross sectional view of a third embodiment of a battery cell pressing jig according to the invention;
- Fig. 5: illustrates a cross sectional view of an alternative embodiment of a pressure pad for a battery cell pressing jig according to the invention;
- Fig. 6: illustrates a cross sectional view of another alternative embodiment of a pressure pad for a battery cell pressing jig according to the invention;
- Fig. 7: illustrates a cross sectional view of a first embodiment battery cell manufacturing system according to the invention;
- Fig. 8: illustrates a cross sectional view of a second embodiment battery cell manufacturing system according to the invention.

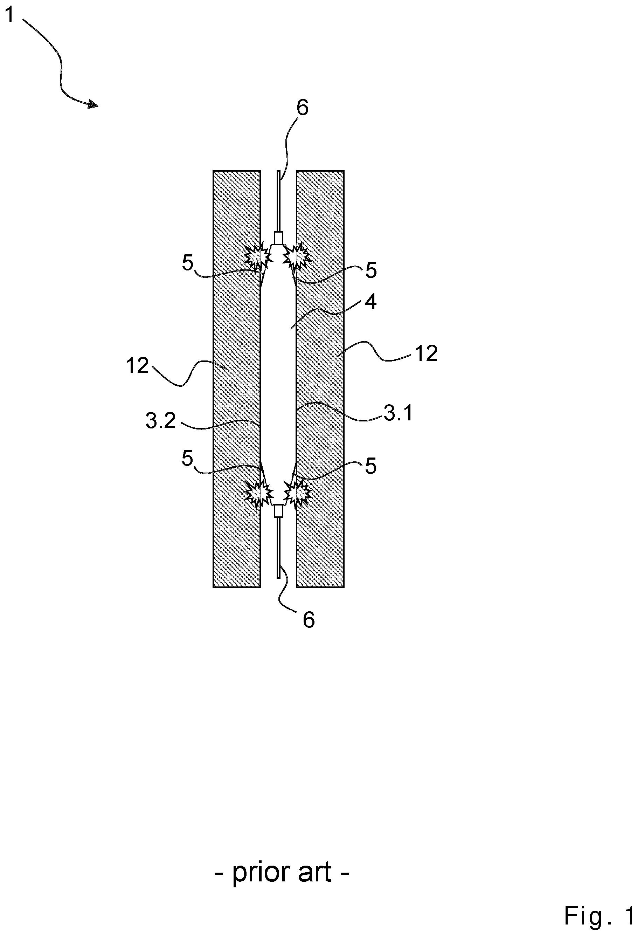

The battery cell pressing jig 1 shown in Fig. 1 is known from prior art and comprises in particular two opposite pressing plates 12 between which a pouch-type battery cell 4 is arranged. The battery cell 4 has two opposite main outer surfaces 3.1, 3.2 that are contacted by the opposite plates 12 that are moved towards each other for the pressing process. The pressing process takes place during the battery activation/formation process, i.e. when the battery is filled with electrolyte or when voltage is applied to the terminals 6 of the battery 4 to form the SEI layer. The known battery pressing jig 1 1has the disadvantage that the plates 12 have inflexible surfaces which prevents uneven surface areas of the battery cell 4 from being pressed. Areas in which this phenomenon can occur in particular are corner areas of the battery 4 or areas of the battery 4 which are adjacent to the terminals 6. These areas do not contain the layer structure of anodes, electrodes and separator layers, as is the case elsewhere, but rather the wiring of the layers to the respective terminal 6, which takes up less space than the layer structure. As a result, the battery 4 may be thinner in this area. In the corner area of the battery, this can lead to the battery 4 having a beveled or slanted area that tapers in the direction of the terminal 6. The combination of rigid/unflexible pressing plates 12 and uneven battery areas can then lead to these areas not being sufficiently pressed and to uneven electrolyte distribution and/or gases not being completely removed in these areas.

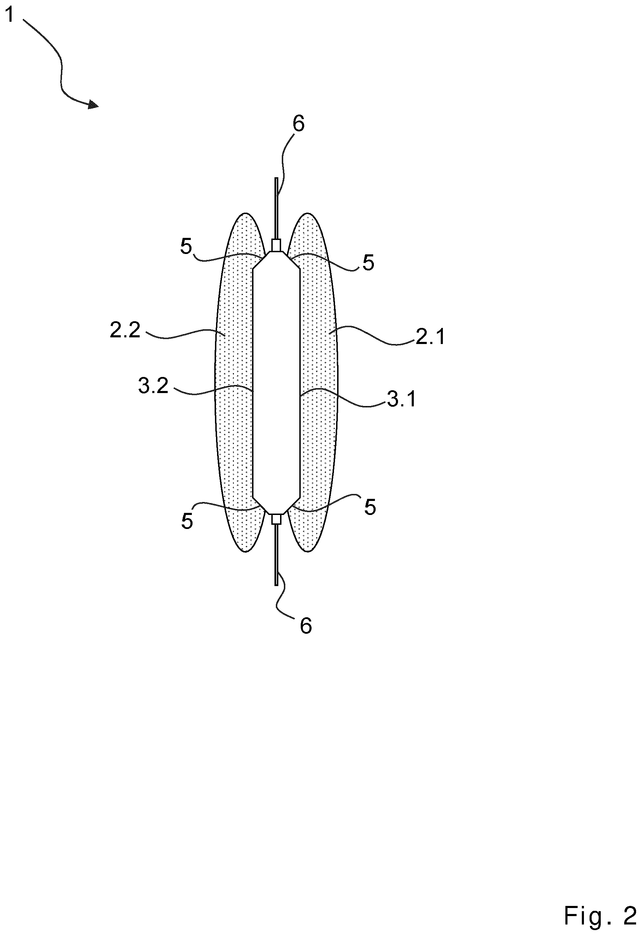

Fig. 2 illustrates a cross sectional view of a first embodiment of a battery cell pressing jig 1 according to the invention. Instead of rigid plates 12, the inventive pressing jig 1 uses elastic pressure pads 2.1, 2.2, which have the significant advantage that they adapt to the outer contour of the battery cell 4 to be pressed and can therefore also pressurize uneven areas of the battery cell 4. It can be seen that the elastic pressure pads 2.1, 2.2 are also in contact with the outer surfaces 3.1, 3.2 of the battery cell 4 in the beveled areas 5 (whereby the dimension of the bevel is depicted exaggerated) of the battery cell 4. In this way, the device according to the invention achieves the advantage that all areas of the pouch battery 4 can be uniformly pressurized and the battery cell 4 thus has a uniform electrolyte distribution and maximum degassing. The pressure pads can have different configurations as long as the pads are elastic. In particular, the pads can be made of an elastic material such as silicone. In addition, the pads can either be made of solid material or be inflatable or have a chamber that can be filled with air or gas. Furthermore, the material thickness of the pressure pad can be varied along the contact surface with the battery. It may also be provided that the pressure pad has an internal reinforcing structure, for example by means of various pressure chambers separated from one another or by internal struts or an internal fabric arranged between the walls of the pressure pad.

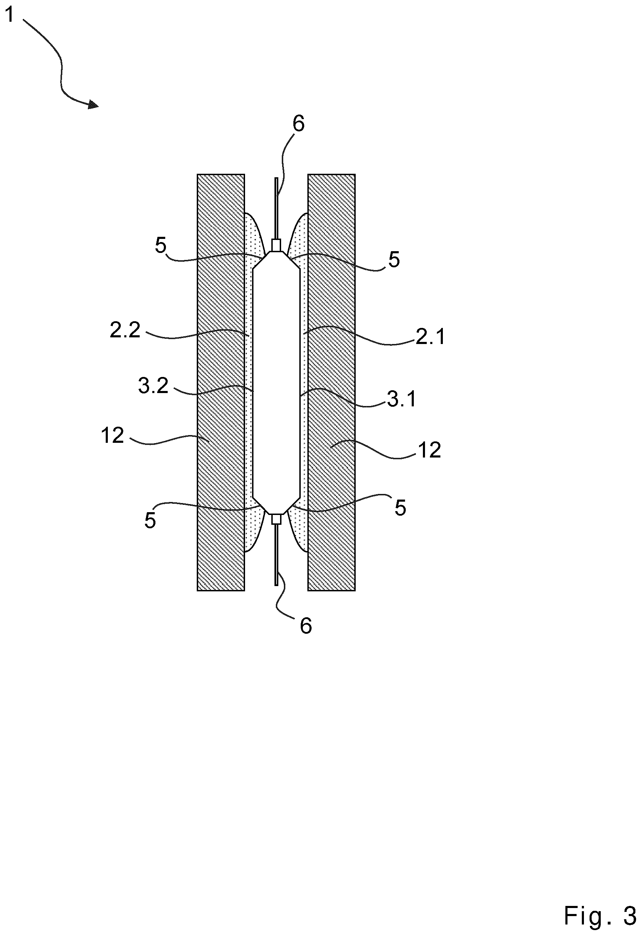

Fig. 3 illustrates a cross sectional view of a second embodiment of a battery cell pressing jig 1 according to the invention. In this embodiment, the pressure pads 2.1, 2.2 are mounted on respective plates 12, on which the pressure pads 2.1, 2.2 are supported. It may be provided that the plates 12 are arranged movably in a direction perpendicular to the surfaces 3.1, 3.2 of the battery cell 4. Due to the flexible design of the pads 2.1, 2.2, the pads 2.1, 2.2 are squeezed as the plates 12 move in the direction of the battery cell 4, so that the pads 2.2, 2.2 advance into the uneven areas 5 of the battery cell surfaces 3.1, 3.2 due to their flexibility, so that the electrolyte is homogeneously distributed in the cells 4 and any gas produced can be removed as much as possible.

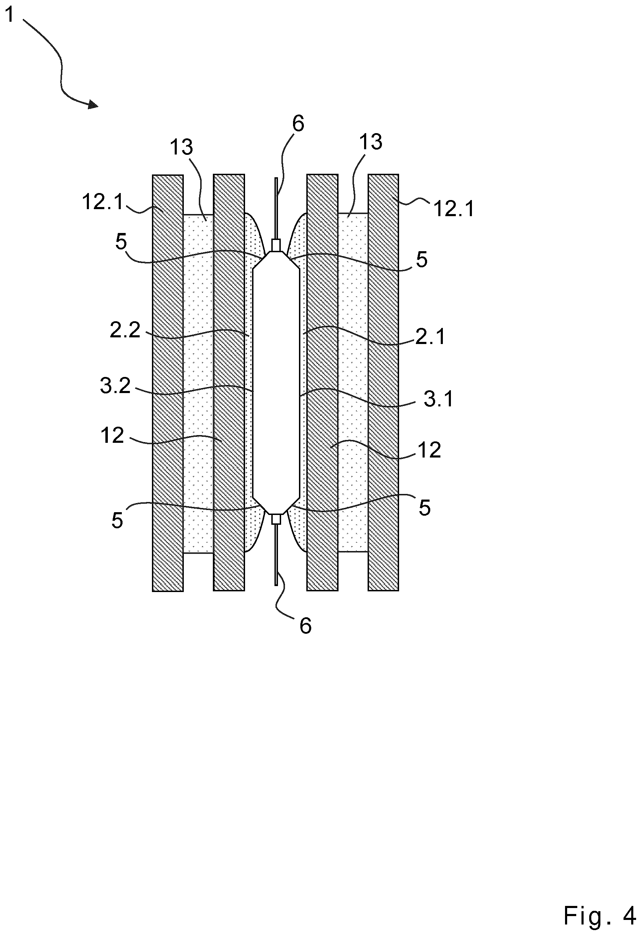

Fig. 4 illustrates a cross sectional view of a third embodiment of a battery cell pressing jig 1 according to the invention. The embodiment provides that, in addition to the plates 12 on which the pressure pads 2.1, 2.2 provided for pressing the battery cell 4 are mounted, further plates 12.1 are provided, against which the plates 12 are supported via respective inflatable cushions 13 arranged between them. For example, the pressure pads 2.1, 2.2 in contact with the battery cell 4 can consist of an elastic solid or inflatable material, such as silicone. The plates 12, 12.1 can be made of a rigid material, for example metal or a metal alloy. The plates 12, 12.1 can be movable relative to the battery cell 4 in a direction perpendicular to the battery cell surfaces 3.1, 3.2, for example along a guide mechanism not shown. The inflatable cushion 13 can be made of an elastic material such as silicone or an inelastic material such as nylon. The plates 12, 12.1 are moved towards the battery cell 4 to squeeze it. The pressure pads 2.1, 2.2 are pressed against the surfaces 3.1, 3.2 of the battery cell 4 as described above and, due to their elasticity, nestle against them over their entire surface, so that a homogeneous pressure distribution of the surfaces 3.1, 3.2 is achieved. The pressure pads 2.1, 2.2 can be brought closer together either by moving the plates 12, 12.1 or by selectively inflating the cushions 13. This allows, for example, the lateral alignment of the battery cell 4 to be influenced if, for example, the terminals 6 are to be aligned at a specific connection point. For example, it may be provided that the pressure is exerted on the plates 12, 12.1 from one side, for example from the right, so that the battery cell 4 moves to the left in the course of the pressing process. However, a connection point provided for the terminals 6 may be exceeded. By inflating the right cushion 13, the battery cell 4 can be aligned further to the right. The same applies in reverse if the pressure is exerted from the left, for example, or if the terminal 6 has not yet reached the connection point. The cushions 13 can also be used if a plurality of battery cells 4 are pressed simultaneously in a device comprising a plurality of pressing jigs in order to compensate for local pressure differences within the row of pressing jigs. For example, a pressure sensor can be installed in each of the pressing jigs in order to determine the local pressure. The pressures in the cushions 13 can then be individually adjusted.

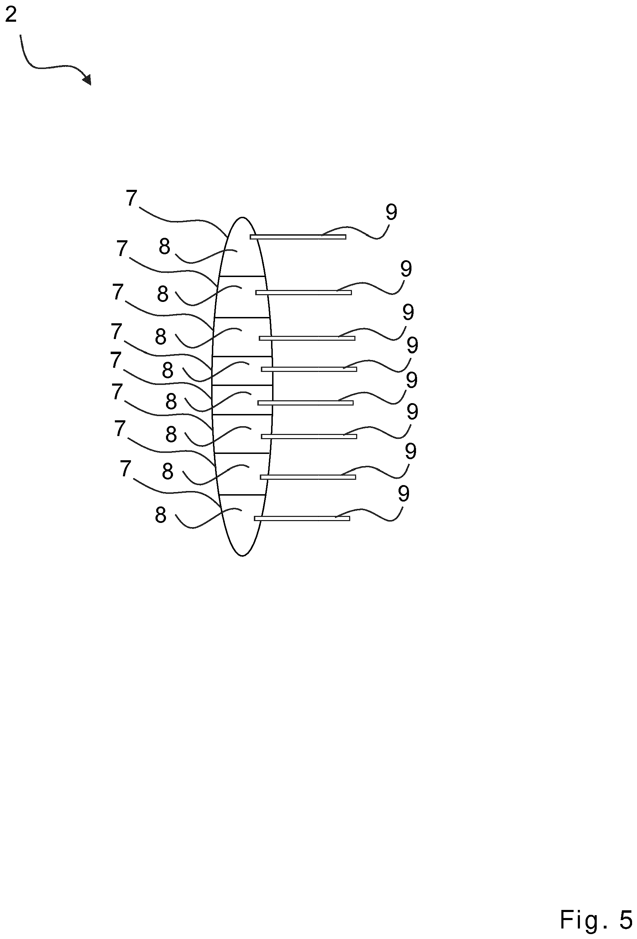

Fig. 5 illustrates a cross sectional view of an alternative embodiment of a pressure pad for a battery cell pressing jig according to the invention. The embodiment of the elastic pressure pad 2 shown is designed to be inflatable. Furthermore, several pressure chambers 8 are provided, which are fluidically separated from each other and each have a separate pressure supply line 9. The separations of the chambers 8 can be designed in such a way that the interaction between the pressures of the chambers 8 is as low as possible. With the proposed configuration, different pressure areas 7 can be realized on the surface of the pressure pad 2, which can be configured for an optimal squeezing result with regard to the battery cell 4 in such a way that the most effective degassing possible is achieved with simultaneous homogeneous electrolyte distribution. For example, the modulus of the central region can be different from the modulus of the peripheral region same. The pressure pad 2.1, 2.2 can for example easily discharge gas in the battery cell 4 during the formation process of the battery cell 4 by allowing higher pressure to be applied to the central region than the peripheral region. Particularly, in the formation process of the battery cell 4, the thickness of the battery cell 4 increases due to the expansion of the negative electrode. At this time, gas generated in the battery cell 4 may be easily discharged to the outside by allowing force to be transmitted from the central region to the peripheral region of the battery cell 4.

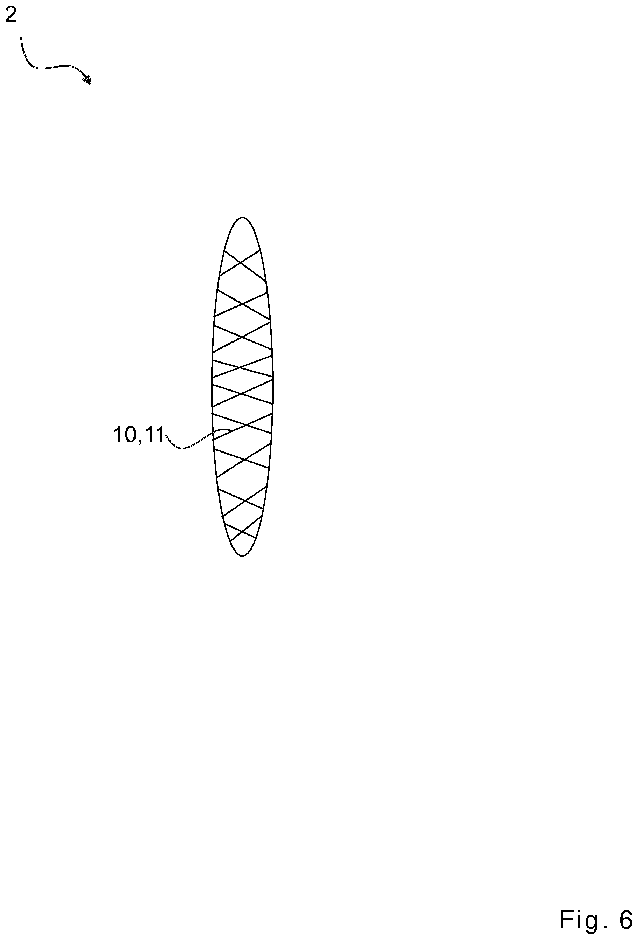

Fig. 6 illustrates a cross sectional view of another alternative embodiment of a pressure pad for a battery cell pressing jig 1 according to the invention. The embodiment shown relates to a pressure pad 2, which is reinforced on the inside with a mesh structure 10 and/or cross struts 11. By providing such a structure, it is possible to create different elasticity areas along the surface of the pressure pad 2. For example, as already mentioned with regard to Fig. 5, it can be provided that a central area of the pressure pad 2 has greater reinforcement and therefore lower elasticity, and in contrast edge areas of the pressure pad 2 have less reinforcement and therefore higher elasticity. The mesh structure 10 can, for example, be suitable for an inflatable embodiment of the pressure pad 2, whereby the elements of the mesh structure can, for example, be elastic bands, which can be slack in an uninflated state of the pressure pad 2 and can be tensioned in the inflated state of the pressure pad 2 and thus cause a tensile stress between the walls of the pressure pad 2, which increases with increasing pad volume. In contrast, the structure with cross struts 11 can be provided for an uninflated embodiment, whereby the cross struts also extend between the walls of the pressure pad 2 but are rigid. When the pressure epad 2 is squeezed during the pressing process, the cross struts 11 are then subjected to compressive stress and can thus influence the elasticity of the pressure pad 2 in a locally adapted manner.

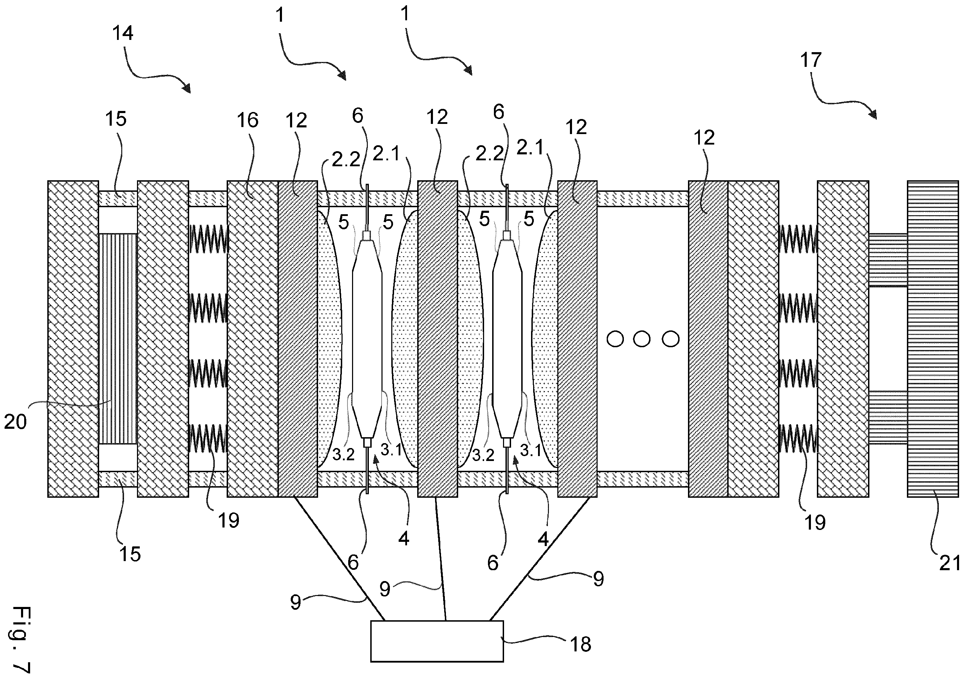

Fig. 7 illustrates a cross sectional view of a first embodiment battery cell manufacturing system 100 according to the invention. The battery cell manufacturing system 100 comprises in particular of a pushing unit 17, a plurality of battery cell pressing jigs 1 and a boundary wall 16 against which the plurality of battery cell pressing jigs 1 is pushed by the pushing unit 17, whereby the pressing jigs 1 are configured according to the embodiment depicted in Fig. 3. The battery cell pressing jigs 1 are aligned next to each other in a frame 14 of the battery cell manufacturing system 100. The pressing jigs 1 arranged next to each other each share a plate 12 arranged between them, which is provided with pressure pads 2.1, 2.2 on both sides. One side of the plate 12 thus faces a first main surface 3.1 of a first battery 4 and the opposite side of the plate 12 faces a second main surface 3.2 of a second battery 4. The frame 14 comprises a guiding mechanism 15 along which the battery cell pressing jigs 1 are guided and movably held, whereby the battery pressing jigs 1 are movable in a direction perpendicular to the surfaces 3.1, 3.2 of the battery cells 4. In the embodiment shown, the guiding mechanism 15 consists of two rods along which the pressing jigs 1 can be moved. For this purpose, the plates 12 have corresponding holes (not shown) through which the rods are inserted. For the pressing process, the pusher 17 is moved in the direction of the boundary wall 16 so that the pressing jigs 1 are pressed together and also moved in the direction of the boundary wall 16. In the process, the battery cells 4 are pressed between the respective pressure pads 2.1, 2.2. An inflation unit 18 is provided, which is connected to the respective pressure pads 2.1, 2.2 via individual pressure supply lines 9 in order to set the desired pressure in the pressure pads 2.1, 2.2. In particular, the pushing unit 17 has a pusher 21 which presses against a plate assembly, between which a plurality of springs 19 are arranged. The plate assembly in turn adjoins a plate 12 of a first of the plurality of pressing jigs 1. The boundary wall 16 is also part of such a plate assembly with springs 19 arranged therebetween. The springs 19 serve to cushion impacts in order to prevent damage to the battery cells 4. The plate assembly of the boundary wall 16 is also movable along the guide mechanism 15 and is in turn supported by a load cell 20 on a plate rigidly mounted on the frame 14. The load cell 20 can be used to determine a pressure acting on the pressing jigs 1, which can be used to control the pressurization of the pusher 21 and/or the pressurization of the pressure pads 2.1, 2.2. Alternatively, the pressure pads 2.1, 2.2 of the embodiment shown in Fig. 7 can of course be configured to be non-inflatable.

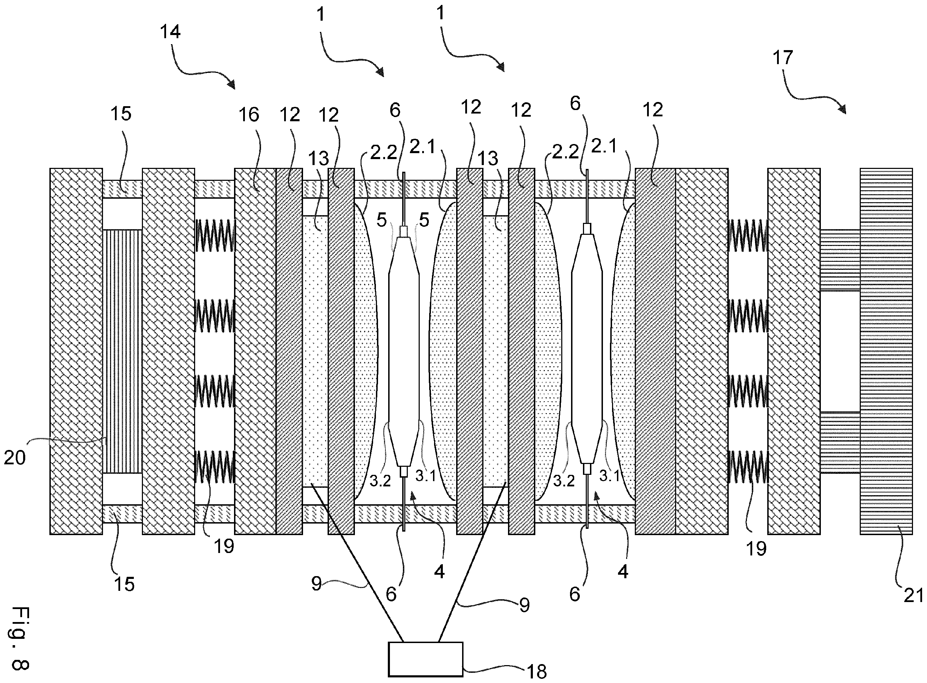

Fig. 8 illustrates a cross sectional view of a second embodiment battery cell manufacturing system 100 according to the invention. This embodiment differs from the embodiment shown in Fig. 7 in particular in that the pressing jigs 1 are configured according to the embodiment shown in Fig. 4. Each of the adjacent pressing jigs 1has a plate 12 facing the respective adjacent pressing jig 1, with an inflatable cushion 13 being arranged between these plates 12. As shown, it is possible that not all of the pressing jigs 1 are designed in such a way that two plates 12 are provided on each side with a cushion 13 arranged between them. As shown, it may instead be provided that, for example, the first pressing jig 1 arranged in the row, i.e. the pressing jig 1 directly adjacent to the pressing unit 17, has two plates 12 with a cushion 13 arranged therebetween on one side and has only one plate 12 on the other side, in the illustration the side facing the pressing unit 17.

The description of the preferred embodiments and the figures merely serve to illustrate the invention and the beneficial effects associated therewith, but should not be understood to imply any limitation. The scope of the invention is to be determined solely by the appended claims.

### LIST OF REFERENCE SIGNS

- 1: Battery cell pressing jig
- 2: pressure pad
- 2.1: 1st pressure pad
- 2.2: 2nd pressure pad
- 3.1: 1st main outer surface
- 3.2: 2nd main outer surface
- 4: pouch-type battery cell
- 5: edge area
- 6: terminal
- 7: pressure zone
- 8: pressure compartment
- 9: pressure supply line
- 10: inner mesh structure
- 11: cross braces
- 12: plate
- 13: cushion
- 14: frame
- 15: guiding mechanism
- 16: boundary wall
- 17: pushing device
- 18: inflation device
- 19: springs
- 20: load cell
- 21: pusher

## Claims

1. Battery cell pressing jig (1) for manufacturing a battery cell, the battery cell pressing jig (1) comprising:
a first pressure pad (2.1) configured to apply a uniform mechanical pressure to a first main outer surface (3.1) of a pouch-type battery cell (4) in a direction essentially perpendicular to the first main outer surface (3.1);
a second pressure pad (2.2) configured to apply a uniform mechanical pressure to a second main outer surface (3.2) of the pouch-type battery cell (4) in a direction essentially perpendicular to the second main outer surface (3.2), the first and second main outer surfaces (3.1, 3.2) of the pouch-type battery cell (4) being opposite each other;
wherein the first and the second pressure pads (2.1, 2.2) are made of an elastic material.

2. The battery cell pressing jig (1) according to claim 1,
wherein the surface areas of the first and the second pressure pad (3.1, 3.2) each protrude beyond the respective outer surfaces (3.1, 3.2) of the battery cell (4) and wherein the first and second pressure pads (2.1, 2.2) each are adapted to curve around outer edges of the battery cell (4).

3. The battery pressing jig (1) of claim 1 or 2,
wherein the first and second outer surfaces (3.1, 3.2) of the battery cell (4) are beveled in at least one respective edge area (5) adjacent to respective terminals (6) of the battery cell (4).

4. The battery pressing jig (1) of cany one of the preceding claims, wherein the pressure pads (2.1, 2.2) are made of or comprise silicone or rubber.

5. The battery pressing jig (1) of any one of the preceding claims,
wherein the pressure pads (1) are configured as inflatable tubes.

6. The battery pressing jig (1) of claim 5,
wherein an inert gas such as nitrogen, argon and/or carbon dioxide is used for inflating the inflatable tubes.

7. The battery pressing jig (1) of claim 6,
wherein the surface area of the pressure pad (2.1, 2.2) facing the battery (4) has a concave shape when inflated.

8. The battery pressing jig (1) of any one of the claims 1 to 4,
wherein the pressure pads (2.1, 2.2) are configured as non-inflatable elastic pads.

9. The battery pressing jig (1) of any one of the preceding claims,
wherein the pressure pad (2.1, 2.2) has a changing elasticity profile in the direction along its surface, for example due to a varation in material properties and/or a variation in material thickness.

10. The battery pressing jig (1) of any one of the preceding claims,
wherein the pressure pads (2.1, 2.2) comprise a plurality of pressure zones (7) configured to apply different pressures along the respective main outer surface (3.1, 3.2) of the battery cell (4), wherein the different pressure zones (7) are provided by a plurality of pressure compartments (8) fluidically separated from each other.

11. The battery pressing jig of claim 10,
wherein each one of the plurality of pressure compartments (8) has an individual pressure supply line (9).

12. The battery pressing jig (1) according to any one of claims 1 to 8,
wherein the pressure pads (2.1, 2.2) each are provided with an inner mesh structure (10) or cross braces (11) arranged within the pressure pads (2.1, 2.2) to provide different strength areas in the pressure pads (2.1, 2.2).

13. The battery pressing jig (1) according to any one of the preceding claims,
wherein the pressure pads (2.1, 2.2) are each mounted on a front side of a plate (12) which is arranged on a side of the pressure pad (2.1, 2.2) facing away from the respective main outer surface (3.1, 3.2) of the battery cell (4).

14. The battery pressing jig (1) according to claim 13,
wherein each pressure pad (2.1, 2.2) is configured as elastic and non-inflatable pad, and wherein the back side of the plate (12) opposite the front side of the plate is fastened to an inflatable cushion (13), wherein the side of the cushion (13) facing away from the plate (12) is attached to a further plate (12.1) serving as an abutment.

15. Battery cell manufacturing system (100),
comprising a plurality of battery pressing jigs (1) according to one of the preceding claims,
wherein the battery pressing jigs (1) are arranged in a frame (14) next to each other in a direction perpendicular to the surfaces (3.1, 3.2) of the battery cells (4) and wherein each battery pressing jig (1) is movable in the direction perpendicular to the surfaces (3.1, 3.2) of the battery cells (4), and
wherein the battery pressing jigs (1) are aligned to one another by a guiding mechanism (15) in a direction parallel to the surfaces (3.1, 3.2) of the battery cells (4);
wherein a first one of the battery pressing jigs (1) in the series of the plurality of battery pressing jigs (1) is arranged adjacent to a boundary wall (16) of the frame (14), and wherein a last one of the battery pressing jigs (1) in the series of the plurality of battery pressing jigs (1) is adjacent to a pushing device (17) which is adapted to push the plurality of battery pressing jigs (1) along the guiding mechanism (15) towards the boundary wall (16); and
wherein an inflation device (18) is provided, which is configured for inflating the plurality of pressure pads (2.1, 2.2) and/or pressure cushions (13) of the plurality of battery pressing jigs (1).

16. Battery cell manufacturing system according to claim 15, further comprising:
a load cell (20) for measuring at least one pressure generated by the pressure unit in the battery cell manufacturing system (100), wherein the at least one measured pressure is used to control a pressure force of the pushing device (17) and/or a pressure provided by the inflation device (18).
